# EUROPEAN PATENT APPLICATION

(11) **EP 0 967 072 A2**
(43) Date of publication of application: **29.12.1999**
(21) Application number: 99304957.6
(22) Date of filing: 23.06.1999
(51) Int. Cl.: B32B 17/10, C03C 27/12

(54) **Decorative window and process for making same**

(30) Priority: 24.06.1998 US 103183
(71) Applicant: Howes, Stephen E., Pompano, FL 33060 (US)
(72) Inventor: Howes, Stephen E., Pompano, FL 33060 (US)
(74) Representative: Findlay, Alice Rosemary

(57) **Abstract**

A decorative window and a process for making a decorative window that includes a decorative resin sheet which can be cut to a desired size and shape. In the disclosed process, a glass master containing a decorative pattern is used to fabricate a mold with a corresponding pattern. The mold can then be oriented against a glass sheet having a release material facing the mold cavity. Hard casting resin is introduced into the cavity and cured. The decorative resin sheet can then be easily removed from the assembly and used to fabricate a window. The resin sheet may then be cut to a desired size and shape. The cured, decorative resin sheet may be laminated to a glass sheet using a soft resin thus forming a decorative window. A second glass sheet may be attached to the decorative window in such a way as to house the resin sheet thus forming a window having an exterior consisting entirely of glass.

## Description

The present invention generally relates to windows and, more specifically, to decorative windows especially suited for use as transom windows and a process for making such decorative windows.

The use of decorative windows in architectural designs has increased dramatically in popularity. Decorative windows are particularly suited for use in front doors of homes and in locations adjacent to front doors, for example, as transom windows. Furthermore, in addition to residential use, commercial enterprises have recognized the pleasing aesthetics of decorative windows.

Traditionally, decorative windows have been fabricated by grinding notches, grooves, and other contours into relatively thick plate glass. The glass would then be polished to restore the smooth surface, resulting in a window with a desirable appearance. However, making windows in this fashion has not been well received because the methods are time consuming and require expensive skilled labor. Decorative windows have also been made as composites by mechanically fastening one or more plain glass panes to a decorative pane. The main disadvantage of windows manufactured in this manner is again the relatively high cost.

Recent advances in the art have produced windows that may be mass produced less expensively than traditional methods. For example, windows with decorative designs and surfaces have been injection molded using clear thermoplastic materials. However, if various sizes, shapes, and patterns of windows are desired, then this process becomes expensive due to the high cost of the tooling. Limited production runs are also cost prohibitive because a new die must be used for each of the different sizes and designs. Additionally, such windows have not met with commercial success because they do not look and feel like glass.

Another known process produces a composite window structure including a cured plastic resin layer with a decorative design adhered to a glass sheet. The process begins by manufacturing a mold with a cavity having a topography that can produce a decorative window with decorative contours. A glass sheet is then prepared by coating one side with an adherent material which will adhere to both the glass and a resin. With the coated surface facing the mold cavity, the glass sheet is clamped to the mold thereby closing the cavity. The cavity is then injected with a liquid resin, and the decorative resin is allowed to cure and adhere to the glass sheet.

Although the method described immediately above has been quite successful, it requires a different mold for each window size and shape. Once the resin layer has adhered to the glass sheet, the window unit generally cannot be resized or reshaped in a practical manner. Accordingly, the process may not be cost effective for use in manufacturing decorative windows for homes and businesses having windows, such as those around doors or entryways, with numerous sizes and shapes. Also, the cured, decorative resin layer is relatively soft and this has been found to present problems if the resin is not directly molded and simultaneously adhered to the supporting glass sheet.

In view of the problems associated with available processes for making decorative windows, there is a need for a more cost effective process of making decorative windows having the flexibility to produce various shapes, sizes, and designs while still producing an aesthetically pleasing product which looks and feels like real glass.

In a preferred embodiment of a first aspect of the present invention, a decorative resin sheet is provided which is at least translucent and preferably transparent. By using the term translucent, it will be appreciated by those of ordinary skill that the invention also encompasses transparent members. The resin sheet is preferably a cured layer of hard plastic casting resin having a flat inner surface and a decorative, contoured outer surface. Preferably, the contoured surface includes a beveled design. The decorative surface of the resin sheet can depict any desirable image such as animals, landscapes, natural designs, or geometric designs. Additionally, the decorative surface is preferably centered on a resin sheet that is substantially larger than the design itself. When centered in this fashion, the hard resin sheet may be cut to a wide variety of shapes and sizes while still retaining the decorative portion at the center.

In accordance with another aspect, the present invention provides a process for making the cured decorative resin sheet. The process preferably includes coating one side of a glass or plastic sheet, for example with a nonstick, release material. A mold having a flat side and a decorative side is formed from a glass master, such as described in U.S. Patent Application Serial No. 08/976,326, filed November 21, 1997, the disclosure of which is fully incorporated herein by reference. The mold is placed on a supporting member such that the decorative side of the mold opposes the coated side of the coated glass sheet. The supporting member, mold, and coated glass sheet may be clamped together, and the liquid casting resin then injected into the cavity. Finally, the process concludes with allowing the resin to cure, removing the clamps, and removing the cured decorative resin sheet from the mold.
The release material on the glass sheet allows the decorative resin sheet to be removed from the glass sheet and then used in any desired manner.

In another aspect of the present invention, the cured decorative resin sheet is cut along its periphery to a desired size and shape preferably leaving the decorative portion of the resin sheet in the center. The cut resin sheet is then laminated to a flat glass sheet using an adhesive which bonds to both the resin and the glass thereby forming a unit which can be used as a decorative window. Preferably, a softer resin or adhesive is used to laminate the hard resin sheet to the glass sheet. This provides benefits related to accommodating the difference in thermal expansion as between the hard resin sheet and the glass sheet.

The lamination of the resin sheet to the flat glass sheet specifically involves supporting a glass sheet of a size and shape equal to or slightly greater than that of the desired window; placing a spacer bar along the periphery of the glass sheet; cutting the decorative resin sheet to a size and shape corresponding to the area inside the spacer bar; applying double-sided adhesive tape to the resin sheet; removing the tape's release paper on three sides, preferably leaving the release paper in place along one side; attaching the resin sheet to the glass sheet within the area of the spacer bar; removing the spacer bar; injecting a soft laminating resin between the resin sheet and the glass sheet; removing the remaining release paper; and allowing the laminating resin to cure. While the hard, decorative resin sheet is specifically described as being directly laminated to the glass sheet, the lamination or adherence can likewise be indirect due to, for example, the introduction of an additional sheet therebetween.

In accordance with another aspect of the present invention, the laminated resin sheet and glass sheet is connected to a second glass sheet thereby forming a sealed unit which houses the decorative resin sheet. The laminating procedure described above can be utilized to attach the resin sheet to the first glass sheet, and then the second glass sheet can be secured in spaced relation opposite the resin sheet. Housing the resin sheet between the two glass sheets in this manner creates a window unit which looks and feels like true glass.

The invention will now be further described by way of example with reference to the accompanying drawings in which:
Fig. 1 is a perspective view of a window constructed in accordance with a preferred embodiment of this invention;
Fig. 2 is a cross-sectional view of a glass master prepared in accordance with the process of this invention;
Fig. 3 is a cross-sectional view of a mold being prepared for making replicas of the glass master shown in Fig. 2;
Fig. 4 is a cross-sectional view of an apparatus which utilizes the mold formed as shown in Fig. 3 to form a resin sheet as a replica of the glass master shown in Fig. 2;
Fig. 5 is an exploded view of the resin sheet released from a glass sheet;
Fig. 6 is a cross-sectional view of an alternate embodiment of this invention in which the window shown in Fig. 1 is further enclosed by a second glass sheet;
Fig. 6A is a cross-sectional view of a third embodiment of this invention in which the decorative resin sheet has been released and cut to a desired size and shape before its inclusion in a window unit such as the unit shown in Fig. 6;
Fig. 7 is a partial perspective view showing the preparation of the resin sheet for lamination to a glass sheet;
Fig. 8 is a perspective view showing subsequent steps of the laminating process; and
Fig. 9 is a cross-sectional view showing subsequent steps of the process including filling a receiving space with a laminating resin.

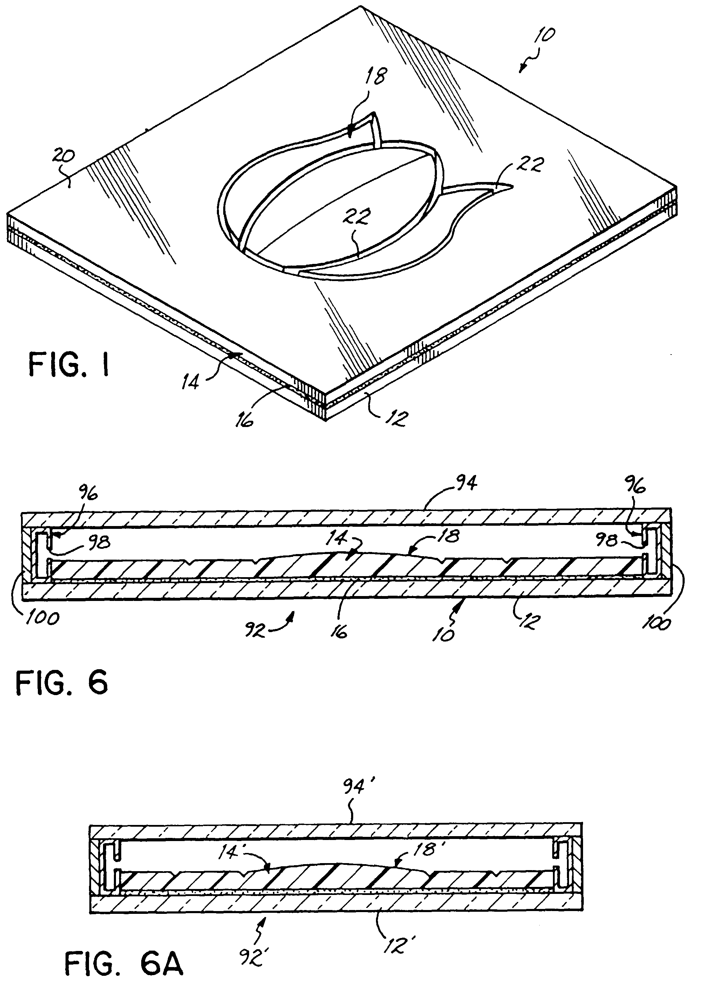

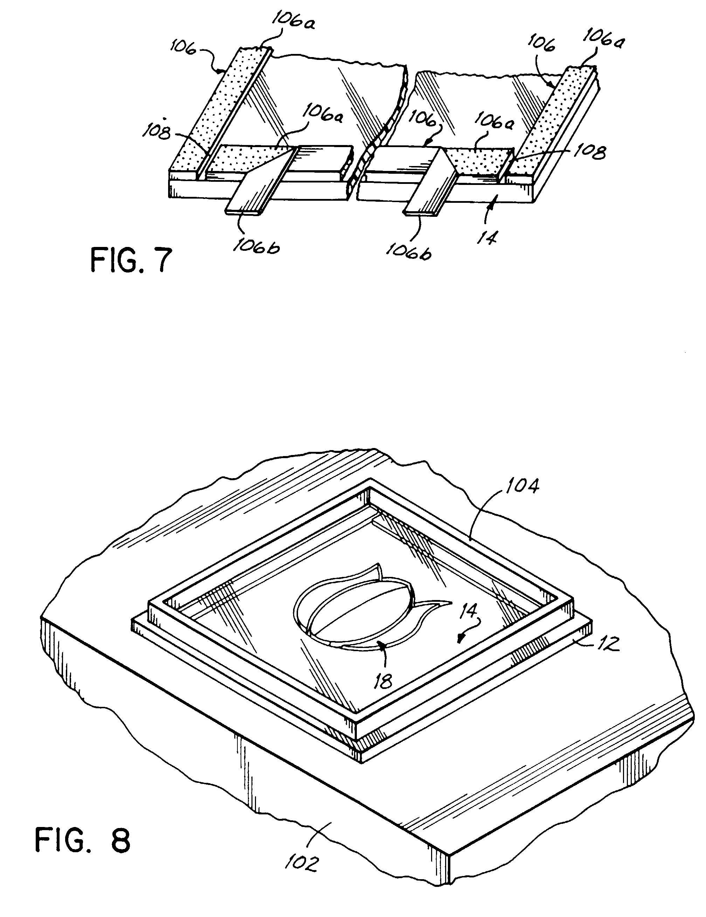

Fig. 1 illustrates a decorative window 10 constructed in accordance with a preferred embodiment of the present invention. Decorative window 10 is comprised of glass sheet 12 and resin sheet 14 which are laminated together with laminating resin 16 using the process to be described in accordance with Figs. 7-9. Laminating resin 16 is preferably a polyester resin or another adhesive such as polyvinyl butyral. Resin sheet 14, which is preferably made from a casting resin which is harder than laminating resin 16, contains decorative design 18 and nondecorative peripheral region 20. In Fig. 1, decorative design 18 is shown to consist primarily of grooves 22 to portray the pictographic image; however, the design can be formed from any number of contoured surfaces, including grooved, raised, or beveled regions. While resin sheet 14 is preferably transparent, it may also be composed primarily of a tinted or colored material to provide different visual effects.

Decorative window 10 appears substantially square, though it may be shaped otherwise without affecting the principles of the present invention. When constructed in the manner described, the mechanical and thermal properties of decorative window 10 are enhanced because the properties of glass sheet 12, resin sheet 14, and laminating resin 16 are employed in combination.

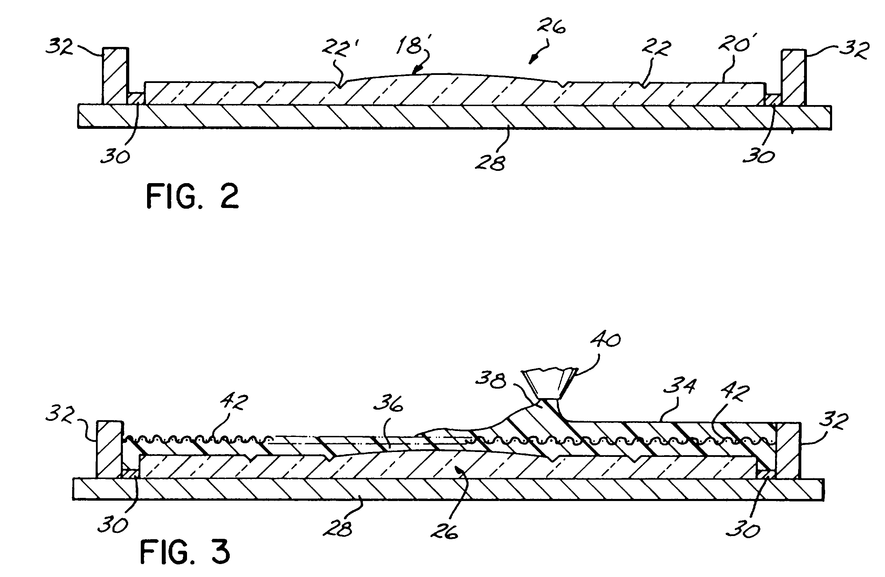

Figs. 2-4 illustrate a method of making resin sheet 14. This method consists of a unique procedure to produce a decorative resin sheet 14 which can be cut to a desired size and shape and then adjoined in any suitable manner to one or more glass sheets thus forming a decorative window unit. Lamination with a softer lamination resin is preferred as will be described below.

Fig. 2 illustrates a glass master 26 which is used to produce a mold which will ultimately be used to form resin sheet 14. While the master described herein is produced in glass, it will be appreciated by those of ordinary skill that the master can be made from other materials, such as plastic. In order to replicate the decorative image desired for resin sheet 14, glass master 26 contains decorative design 18', nondecorative peripheral region 20', and grooves 22' which correspond to the respective regions of resin sheet 14 depicted in Fig. 1. The techniques necessary to produce the decorative image of glass master 26 are well known to those skilled in the art of making decorative glass panels.

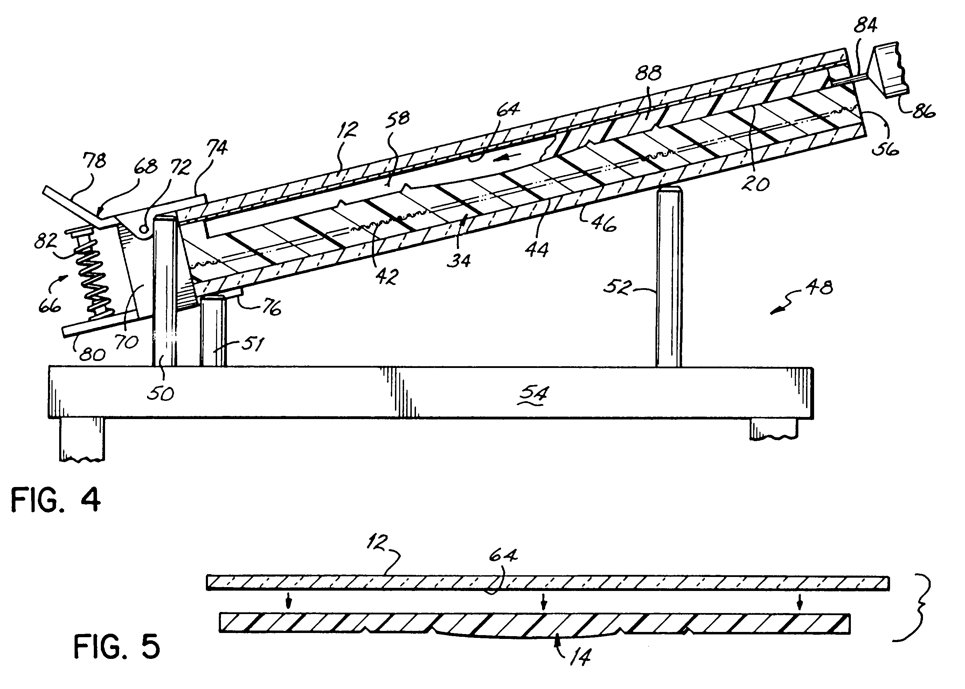

The flat side of glass master 26 is adhesively mounted on backing board 28, along with spacer strips 30 and peripheral framework 32. Both spacer strips 30 and peripheral framework 32 extend around the periphery of glass master 26 regardless of its shape. The height of spacer strips 30 dictates the resultant height of resin sheet 14 and should be sized accordingly, as will be further described in accordance with Fig. 4. To prepare glass master 26 for producing a mold, any of its untextured portions are polished to a high gloss and waxed using a wax product such as paste wax, which can be obtained from S.C. Johnson & Son, Inc. of Racine, Wisconsin.

Fig. 3 illustrates the fabrication of mold 34 which will be used in a later step of the process to produce resin sheet 14 as a replica of glass master 26. Mold 34 is fabricated by filling mold cavity 36, which is bounded by peripheral framework 32 of glass master 26, with mixture 38. Mixture 38 of this process can be the mixture described in U.S. Patent Application Serial No. 08/976,326. The mixture therein described consists of HS II RTV Silicone and 10:1 Colored HS II Catalyst which are blended with a premixed substance consisting of a light oil additive mixed with a fast-curing tin catalyst. Because glass master 26 was previously waxed, silicone from mixture 38 will not be left on glass master 26 when mold 34 is removed.

The process continues by pouring mixture 38 out of container 40 to an intermediate level of mold cavity 36. Once mixture 38 is poured to the intermediate level, wire mesh 42 is laid on top of mixture 38 to provide enhanced strength to mold 34 once it has cured. Next, mixture 38 is further poured on top of wire mesh 42 up to a height corresponding to the height of peripheral framework 32, forming an upper surface. This upper surface of mixture 38 should be flat in order for mold 34 to be used properly in the subsequent step of the process herein described. Mixture 38 is allowed to cure at room temperature for approximately twenty-four hours. After curing is complete, mold 34 is removed from glass master 26, spacer strips 30, and peripheral framework 32.

Fig. 4 illustrates the use of mold 34 to produce resin sheet 14. Once removed from glass master 26, mold 34 is inverted and flat surface 44 of mold 34 is placed against a support member 46 leaving the decorative side of mold 34 facing upward. Support member 46 is then engaged with fixture 48 thereby providing a base for producing resin sheet 14. While fixture 48 is capable of holding support member 46 in a level or inclined position, it is preferred at this point of the process that support member 46 be inclined. As shown in Fig. 4, fixture 48 may include several rows of pegs 50, 51, and 52 upstanding from table 54. Pegs 50, 51, and 52 can be configured to incline support member 46 resulting in raised end 56 which will enhance the flow of the liquid resin to be injected in accordance with a later step of the process.

Once mold 34 is positioned, a flat second member such as glass sheet 12 is placed on top of mold 34 such that glass sheet 12 is resting on peripheral walls 60 thereby producing cavity 58. While the invention will be described with glass sheet 12 being the flat second member, the member can be made of any material which allows one to view cavity 58, such as a plastic. Cavity 58 will subsequently be filled with a liquid casting resin which cures to a high degree of hardness to ultimately produce resin sheet 14. Thus, the volume of cavity 58 will determine the final volume of resin sheet 14. Because the volume of cavity 58 depends on the height of peripheral walls 60 of mold 34, the height of spacer strips 30 used in creating mold 34 actually prescribes the volume of resin sheet 14. For example, referring back to Fig. 3, when spacer strips 30 are relatively short, the peripheral region of mold 34 will extend substantially beyond the interior region, thereby creating a larger interior cavity region once mold 34 is removed from glass master 26. Then, when mold 34 is subsequently used as shown in Fig. 4, cavity 58 will be larger allowing a resin sheet 14 of a relatively large size to be produced.

Before placing glass sheet 12 on top of peripheral walls 60 of mold 34, glass sheet 12 must be prepared in accordance with a preferred embodiment of the present invention. In order to allow the release of resin sheet 14 once it is formed, the side of glass sheet 12 facing the decorative side of mold 34 is coated with releasing agent 64. Releasing agent 64 is preferably a non-stick substance such as a wax-like mold release by the name of 1-2-3 sold by N.G.I., Inc. d/b/a Glasslam of Pompano Beach, Florida. Applying releasing agent 64 in this manner will result in a final molded product consisting solely of resin sheet 14. Because the produced resin sheet 14 is unattached to any other materials, and because it cures with a high degree of hardness, it can be easily cut to a desired shape and size. The decorative resin sheet can then be laminated to a glass sheet of corresponding shape and size using a laminating resin in order to produce a window such as decorative window 10 shown in Fig. 1, as will be described below.

After glass sheet 12 is coated with releasing agent 64 and placed on top of mold 34, spring clamps 66 (only one of which is shown) are placed in spaced apart relationships around the sides of mold 34 remote from raised end 56. Each spring clamp 66 includes clamping bracket 68 pivotally mounted on lower bracket 70 by rod 72. Furthermore, each spring clamp 66 includes an upper clamping tab 74 engaged with glass sheet 12, and a lower clamping tab 76 engaged with support member 46. Spring clamps 66 further include an upper clamping handle 78 and a lower clamping handle 80 with a compression spring 82 disposed therebetween which applies compression forces from glass sheet 12 to peripheral walls 60 to support member 46 in order to keep cavity 58 substantially leakproof. Spring clamps 66 may be manually loosened for installation or removal by applying pressure between the outer surfaces of upper clamping handle 78 and lower clamping handle 80.

A thin tube 84 which protrudes from supply chamber 86 is then inserted into raised end 56 of mold 34 to fill cavity 58 with liquid resin 88. Preferably, liquid resin 88 is a clear casting resin which consists primarily of a clear base casting resin such as S1189A which can be obtained from Silmar Resins of Fort Wright, Kentucky. In addition, 2-4% of the blended resin should be a stabilizer such as Tinuvin 328 which can be obtained from Ciba-Geigy Corp. of Philadelphia, Pennsylvania. A stabilizer is necessary to prevent the hardened resin sheet from turning yellow over time. In addition, the stabilizer beneficially inhibits the transmission of ultraviolet light. An alternative clear casting resin can be obtained from Reichhold Chemicals, Inc. of Durham, North Carolina under the name 32-032. While liquid resin 88 is preferably transparent, a tinted or colored resin may likewise be used to obtain a different visual result.

Once cavity 58 is filled completely with liquid resin 88, the assembly consisting of spring clamps 66, glass sheet 12, mold 34, and support member 46 is brought into a level position with support member 46 resting on pegs 50 and 52 in order to allow liquid resin 88 to completely fill cavity 58. One or more spring clamps 66 may then be added to raised end 56, which is now level, in order to complete the seal between glass sheet 12 and peripheral walls 60.

The sealed mold assembly is then allowed to cure either at room temperature or by heat curing which decreases the required curing time. At room temperature, a complete cure is generally obtained in one to two hours. Once cured, spring clamps 66, mold 34, and glass sheet 12 are removed and resin sheet 14 having a decorative pattern corresponding to that of glass master 26 is removed. Additional resin sheets may thereafter be formed using the process described above.

After the resin sheet has cured, it is separated from the mold assembly. Fig. 5 illustrates a preferred aspect of the present invention wherein resin sheet 14 is released from glass sheet 12 by way of releasing agent 64. Once released, resin sheet 14 may be cut to the desired size and shape by cutting away all or part of nondecorative peripheral region 20 and then either used alone, or laminated to a glass sheet with a laminating resin in order to form a window such as decorative window 10 of Fig. 1.

Decorative window 10 may either be used alone or further manufactured in accordance with an embodiment of the present invention which is illustrated in Fig. 6. As shown in Fig. 6, decorative window 10, which consists of resin sheet 14 laminated to glass sheet 12 using a softer laminating resin 16, may be included within a window assembly 92 by mounting a second glass sheet 94 to decorative window 10. Second glass sheet 94 and decorative window 10 are fastened in a spaced apart relationship such as to enclose resin sheet 14 on which, in this embodiment, decorative design 18 is substantially centered. Along each edge of window assembly 92 are hollow metal tubes 96 such as Trimline Spacers from the Hygrade Company of New York, New York. To form a framework, tubes 96 are joined at the corners of window assembly 92 with "L"-shaped brackets (not shown) extending into their hollow interior. Tubes 96 contain inward directed rows of small holes 98 and are filled with a desiccating material to prevent the formation of condensed moisture on the surfaces of window assembly 92. The regions between the outer surfaces of tubes 96, glass sheet 12, and second glass sheet 94 are filled with a sealing material 100 such as Polypo, which can be obtained from Product Research Corporation of Atlanta, Georgia, to form a hermetic seal.

A primary advantage of window assembly 92 is that both sides of the window are glass, while still displaying the decorative image of resin sheet 14. This allows for easier cleaning of the window and further enhances the thermal properties of the unit due to the added glass sheet and the air trapped inside the assembly. Accordingly, window assembly 92 is particularly suitable for use as an exterior window such as a transom window.

Fig. 6A illustrates an alternate embodiment of window assembly 92 which utilizes the above described primary advantage. When produced according to the method heretofore described, resin sheet 14 can be cut to a shape and size according to the aesthetics desired by removing all or part of nondecorative peripheral region 20. Thus, intricate shapes which heretofore could not be formed may now be fabricated by using the method of the present invention. Fig. 6A depicts window assembly 92' in which resin sheet 14' has been cut to a desired size and shape before laminating it to glass sheet 12' and housing it within window assembly 92' through the addition of second glass sheet 94'. Decorative design 18' can remain substantially centered, can be offset, or, as shown in Fig. 6A, can comprise the entire area of resin sheet 14'.

A method of laminating resin sheet 14 to a glass sheet such as glass sheet 12 is shown in Figs. 7-9. Lamination of resin sheet 14 to glass sheet 12 forms a window such as decorative window 10 shown in Fig. 1. Any cutting of resin sheet 14 should be completed prior to its use in the lamination procedure described herein.

Referring first to Fig. 7, double-sided adhesive tape 106 is adhesively secured along the outer edges of resin sheet 14, leaving gaps 108 generally at the corners thereof having a width of approximately 1/32 inch. Then, the release paper of the double-sided adhesive tape 106 is removed on three sides leaving one side intact. Preferably, a longer edge of the window is left with the adhesive tape still having the release paper on top. This release paper should have the two corners 106b of the release paper turned back approximately one inch and creased at an angle to protrude from the edge of the glass so that it may be easily removed later in the process as will be described below.

Fig. 8 illustrates the next step in laminating resin sheet 14 to glass sheet 12. Glass sheet 12 is laid on table 102 and spacer bar 104 is placed along the periphery of glass sheet 12. Spacer bar 104 forms a boundary within which resin sheet 14 is placed, and should be sized and placed accordingly. With the adhesive tape 106 facing glass sheet 12, resin sheet 14 is joined with glass sheet 12 within the region bounded by spacer bar 104, aligning the respective edges. Thus, glass sheet 12 will adhere to the adhesive 106a on the three sides of tape 106 in which the release paper has been removed. This creates a laminating resin receiving space 110 between resin sheet 14 and glass sheet 12. Spacer bar 104 is then removed.

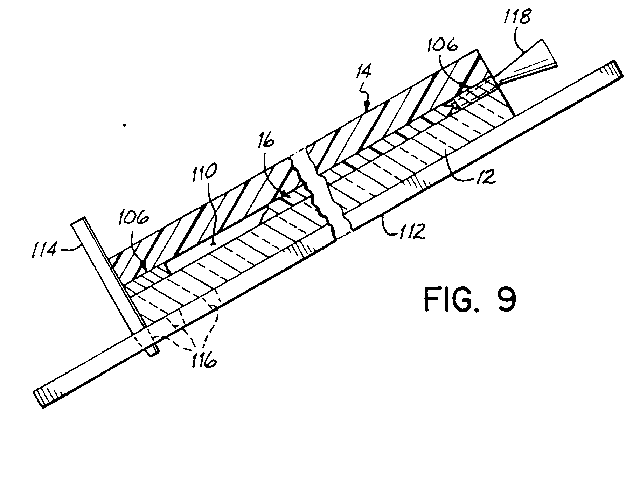

As shown in Fig. 9, the assembly is placed on a tilt table 112 and held in place by a plurality of pegs or stop members 114 which may be received in any one of several holes 116 in tilt table 112. A funnel 118 is then placed between glass sheet 12 and the double-sided adhesive tape 106 which still has the release paper thereon. Receiving space 110 is then filled with laminating resin 16 or another adhesive such as polyvinyl butyral. Laminating resin 16 is preferably a polyester resin. A measured volume of laminating resin 16 is poured or pumped into receiving space 110. Once the correct volume of adhesive has been poured or pumped, the last of the release paper is removed and the unit is adhered on all sides. The composite assembly is then laid in a level position by lowering tilt table 112. Any trapped air will escape by way of gaps 108.

As mentioned, laminating resin 16 is preferably a soft polyester resin whereas resin sheet 14 is composed of a hard casting resin. Because resin sheet 14 and glass sheet 12 have different coefficients of thermal expansion, it is desirable to provide an intermediate material which can account for any expansion or contraction of the window unit. This is especially true for exterior windows because of the exposure to various temperatures throughout the year. Using a soft resin for laminating resin 16 allows for such expansion and contraction thus protecting the window from breaking.

The described lamination process can further be utilized to form the window assembly 92 shown in Fig. 6. Once decorative window 10 is completed, an additional glass sheet such as second glass sheet 94 can be mounted in spaced relation to resin sheet 14. When forming window assembly 92, spacer bar 104 is used to keep decorative window 10 in a spaced apart relationship from second glass sheet 94. In the description accompanying Fig. 6, spacer bar 104 is more precisely described as tubes 96.

## Claims

1. A decorative translucent member comprising:
(a) a resin sheet having first and second surfaces, the first surface being substantially flat and the second surface having a decorative, contoured image molded therein;
(b) a glass sheet having a substantially flat first surface; and
(c) a laminating resin adhering the first surface of the resin sheet to the first surface of the glass sheet, wherein the resin sheet is formed of a harder resin than the laminating resin.

2. A decorative translucent member as claimed in Claim 1 wherein the resin sheet includes a casting resin.

3. A decorative translucent member as claimed in either Claim 1 or Claim 2 wherein the laminating resin is a polyester resin.

4. A decorative translucent member as claimed in any preceding Claim wherein the decorative pattern on the second surface of the resin sheet is substantially centered on the flat glass sheet.

5. A decorative translucent member as claimed in any preceding Claim wherein the decorative, contoured image includes bevels.

6. A decorative translucent member as claimed in any preceding Claim further comprising a window frame structure connected to a periphery of the flat glass sheet.

7. A decorative translucent member as claimed in any preceding Claim wherein the translucent member forms part of a window having a second glass sheet mounted in spaced relation to the resin sheet and opposed to the decorative, contoured image.

8. A process for making a decorative member comprising the steps of:
(a) introducing a liquid casting resin into a mold cavity and against a flat surface to form a resin sheet having a flat surface on one side and a contoured, decorative surface on an opposite side;
(b) curing the liquid casting resin; and
(c) releasing the cured resin sheet from the flat surface and the decorative mold cavity.

9. A process as claimed in Claim 8 further comprising the step of laminating the resin sheet to a glass sheet.

10. A process as claimed in Claim 9 further comprising the step of cutting the resin sheet to a smaller size prior to the laminating step.

11. A process as claimed in either Claim 9 or Claim 10 further comprising the step of fastening an outer window frame structure to the decorative member.

12. A process as claimed in Claim 11 further comprising the step of mounting a second glass sheet in opposed, spaced relation to the contoured, decorative surface.
